# EUROPÄISCHE PATENTANMELDUNG

(11) **EP 2 163 784 A2**
(43) Veröffentlichungstag der Anmeldung: **17.03.2010**
(21) Anmeldenummer: 09169922.3
(22) Anmeldetag: 10.09.2009
(51) Int. Cl.: F16F 9/512

(54) **Schwingungsdämpfer mit amplitudenselektiver Dämpfkraft**

(30) Priorität: 15.09.2008 DE 102008042103
(71) Anmelder: ZF Friedrichshafen AG, 88038 Friedrichshafen (DE)
(72) Erfinder: Hammer, Thomas, 97653, Bischofsheim (DE)

(57) **Zusammenfassung**

Schwingungsdämpfer, umfassend einen mit Dämpfmedium gefüllten Zylinder, in dem eine Kolbenstange mit einem Kolben axial beweglich geführt ist, wobei der Kolben den Zylinder in einen kolbenstangenseitigen und einen kolbenstangenfernen Arbeitsraum unterteilt, mit einer Ventilhülse, die zusammen mit einem Deckel und einem Boden Arbeitskammern bilden, die von einem auf der Kolbenstange axial beweglichen Ventilring getrennt werden, wobei der Boden und der Deckel als scheibenförmige Einzelteile zur Ventilhülse ausgeführt sind.

## Beschreibung

Die Erfindung betrifft einen Schwingungsdämpfer mit amplitudenselektiver Dämpfkraft gemäß dem Oberbegriff von Patentanspruch 1.

Aus der DE 10 2006 054 257 A1 ist ein gattungsbildender Schwingungsdämpfer bekannt, in dessen kolbenstangenseitigem Arbeitsraum eine Ventilhülse angeordnet ist, die einen Boden aufweist. Die Hülse und der Boden sind einstückig ausgeführt. Am Innendurchmesser und am Außendurchmesser der Hülse verlaufen axiale Nuten, die als Strömungsverbindungen zwischen Arbeitskammern der Ventilhülse oder als Anbindung einer Arbeitskammer mit einem Arbeitsraum eines Zylinders dienen.

Die Ventilhülse stellt ein vergleichsweise teures Bauteil dar, da die Nuten durch Fräsen hergestellt werden müssen.

Eine Überlegung könnte darin bestehen, dass man die Ventilhülse mit dem Boden als ein Sinterteil ausführt, doch ist es sintertechnisch schwierig eine relativ lange Hülse mit einer dünnen Wandstärke herzustellen.

Die Aufgabe der vorliegenden Erfindung besteht darin, eine Ventilhülse im Hinblick auf eine kostengünstige Fertigung weiterzuentwickeln.

Erfindungsgemäß wird die Aufgabe dadurch gelöst, der Boden und der Deckel als scheibenförmige Einzelteile zur Ventilhülse ausgeführt sind.

Der große Vorteil der Erfindung besteht darin, dass die Ventilhülse nun z.B. aus einem rohrförmigen Halbzeug hergestellt werden kann und damit der Zerspanungsaufwand im Vergleich zum Stand der Technik deutlich abnimmt. Auch eine sintertechnische Herstellung wird durch die Trennung von Boden und Ventilhülse erleichtert, da sich der Wandstärkenunterschied zwischen dem Boden und der Ventilhülse nicht mehr auswirken kann.

In weiterer vorteilhafter Ausgestaltung der Erfindung weist die Ventilhülse auf ihrem Außendurchmesser mindestens eine Axialnut auf, die sich über ihre gesamte Länge erstreckt. Zusätzlich weist die Ventilhülse auf ihrem Innendurchmesser mindestens eine Längsnut auf, die sich ebenfalls über ihre gesamte Länge erstreckt. Beide Nutformen lassen sich z. B. durch ein Räumverfahren herstellen, in Abhängigkeit der Räumvorrichtung ggf. sogar in einer einzigen Werkstückaufspannung.

Gemäß einem vorteilhaften Unteranspruch trägt der Boden zur Innenwandung des Zylinders eine Ringdichtung, die in einer Ringnut angeordnet ist, die von einem Absatz des Bodens und einer Deckscheibe gebildet wird. Der Boden lässt sich in dieser Ausgestaltung auch sehr gut sintertechnisch herstellen, da die Absatzgeometrie Hinterschneidungen, die sich nur aufwändig entformen lassen, vermeidet.

Um keine zusätzlichen Bauteile verwenden zu müssen, ist die Deckscheibe als eine den Abfluss aus einer Arbeitskammer bestimmenden Drosselscheibe ausgeführt.

Bei einer Variante trägt die Ventilhülse mindestens einen Verlängerungsring, wobei der Verlängerungsring dem Innen- und Außenprofil der Ventilhülse angepasst und in Umfangsrichtung orientiert montiert ist. Der Verlängerungsring ermöglicht die stufenweise Anpassung des Hubbereichs mit amplitudenselektiver Dämpfkraft, ohne dass jeweils eine neue Ventilhülse angefertigt werden muss.

In weiterer vorteilhafter Ausgestaltung der Erfindung schneidet ein Kontaktbereich zwischen der Ventilhülse und einem Verlängerungsring einen Verbindungskanal. Durch eine derartige Teilungsfuge zwischen einem Verlängerungsring und der Ventilhülse kann der Verbindungskanal als offener Querschnitt stirnseitig ausgeführt werden. Der offene Querschnitt kann sintertechnisch leicht hergestellt werden. Auch eine spanlose Prägung kann sinnvoll sein.

Damit der mindestens eine Verlängerungsring auch außerhalb des Zylinders zur Ventilhülse zentriert ist, verläuft der Kontaktbereich konisch zur Längsachse der Ventilhülse.

Gemäß einem vorteilhaften Unteranspruch weist der Verlängerungsring in Richtung der Ventilhülse ein axial vorstehendes Formschlusselement auf, das in eine stirnseitige Aussparung der Ventilhülse eingreift.

Um insgesamt eine einfache Raumform zu erreichen, bildet die stirnseitige Aussparung in der Ventilhülse zumindest einen Teilquerschnitt des Verbindungskanals. Der Verbindungskanal übt damit eine Doppelfunktion aus.

Des Weiteren kann vorgesehen sein, dass ein Verlängerungsring zur Innenwandung des Zylinders eine Ringdichtung trägt, die in einer Ringnut angeordnet ist, die von einem Absatz des Verlängerungsrings und einer Deckscheibe gebildet wird. Die Deckscheibe kann eine vergleichsweise geringe Materialstärke aufweisen, so ein kurzer Bauraum ausreicht.

Anhand der folgenden Figurenbeschreibung soll die Erfindung näher erläutert werden.
- Fig. 1: Schwingungsdämpfer gemäß dem Stand der Technik
- Fig. 2: Erfindungsgemäße Ventilhülse für einen Schwingungsdämpfer nach Fig. 1
- Fig. 3 u. 4: Explosionszeichnung einer Ventilhülse mit Verlängerungsringen
- Fig. 5: Queransicht der Ventilhülse
- Fig. 6: Querschnitt durch die Ventilhülse nach Fig. 3
- Fig. 7 - 9: Außenansichten der Ventilhülse nach Fig. 3

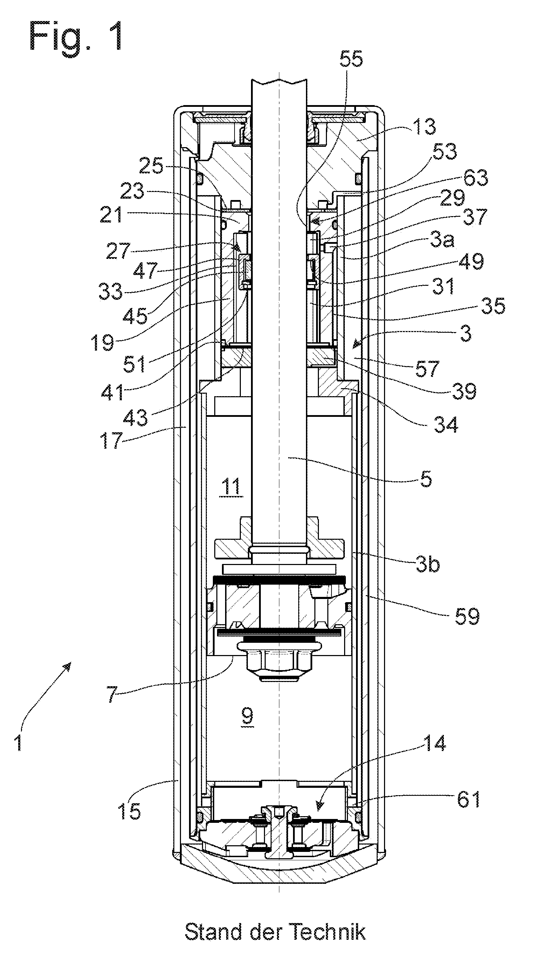

Die Figur 1 zeigt einen aus dem Stand der Technik bekannten Schwingungsdämpfer 1, der einen Zylinder 3 aufweist, in dem eine Kolbenstange 5 mit einem Kolben 7 axial beweglich gelagert ist. Der Kolben 7 unterteilt den Zylinder 3 in einen kolbenstangenfernen und einen kolbenstangenseitigen Arbeitsraum 9; 11, wobei eine Kolbenstangenführung 13 den kolbenstangenseitigen Arbeitsraum 11 und ein Bodenventil 14 den Zylinder 3 endseitig verschließen.

Der Zylinder 3 wird von einem Behälterrohr 15 umschlossen, wobei ein dadurch bestimmter Ausgleichsraum 17 das Volumen der ein- und ausfahrenden Kolbenstange 5 kompensiert.

Im kolbenstangenseitigen Arbeitsraum 11 ist eine Ventilhülse 19 angeordnet, deren einstückiger Boden 21 über eine Drosselscheibe 23 mittelbar an einer in Richtung des Arbeitsraums 11 weisenden Stirnfläche 25 der Kolbenstangenführung 13 anliegt. Innerhalb der Ventilhülse 19 ist ein Ventilring 27 auf der Mantelfläche der Kolbenstange 5 axial gleitend gelagert, so dass innerhalb der Ventilhülse zwei Arbeitskammern 29; 31 vorliegen. Zwischen den beiden Arbeitskammern 29; 31 besteht eine Strömungsverbindung 33, die z. B. von einer Längsnut in der Innenwandung der Ventilhülse 19 gebildet wird.

Die Ventilhülse 19 wird radial von der Innenwandung des Zylinders 3 geführt, der mindestens im Bereich des Hubwegs des Ventilrings, in diesem Fall auf der Gesamtlänge der Ventilhülse 19 im Durchmesser verkleinert ist. Der Zylinder 3 ist in Axialrichtung mehrteilig ausgeführt und zwischen den Längenabschnitten 3a; 3b ist ein Adapterring 34 angeordnet, der die beiden Längenabschnitte 3a; 3b zueinander zentriert und eine axiale Verspannung zwischen dem Bodenventil 14 und der Kolbenstangenführung 13 gewährleistet. Eine Außendurchmesserreduzierung der Ventilhülse 19 in der Form mindestens einer Axialnut 35 bildet einen Axialkanal zwischen dem kolbenstangenseitigen Arbeitsraum 11 und der zwischen dem Ventilring 27 und dem Boden 21 vorliegenden Arbeitskammer 29 innerhalb der Ventilhülse 19, wobei zwischen dem Axialkanal 35 und der Arbeitskammer 29 noch mindestens ein Verbindungskanal 37 besteht. Man kann auch mehrere Axialkanäle vorsehen. Die von einem Deckel 39 der Ventilhülse 19 und dem Ventilring 27 begrenzte Arbeitskammer 31 weist eine Drosselöffnung 41 zum kolbenstangenseitigen Arbeitsraum 11 auf. Die Drosselöffnung 41 wird von mindestens einer zwischen dem Deckel und der Ventilhülse angeordneten Drosselscheibe 43 gebildet.

Der Ventilring 27 verfügt über einen auf der Kolbenstange gleitenden Reibring 45 und einen den Reibring mit einer Mantelfläche außenseitig umschließenden Dichtring 47, wobei sich der Dichtring 47 radial in Grenzen zum Reibring 45 bewegen kann. Der Reibring 45 kann sich axial an einem Boden 49 des Dichtrings 47 und einem Sicherungsring 51 abstützen.

In dieser Variante der Erfindung ist im Zylinder eine Ventilöffnung 53 ausgeführt, die über die Voröffnungsscheibe 23 und einen Anschlusskanal 55 im Boden 21 der Ventilhülse 19 an die Arbeitskammern 29; 31 der Ventilhülse 19 mit einem Fluidenweg 57 gekoppelt. Der Fluidenweg 57 ist zum Ausgleichsraum 17 abgedichtet und wird von einer Außenmantelfläche des Zylinder 3a; 3b und einem zumindest auf einem Längenabschnitt umschließenden Hüllrohr 59 gebildet. Über eine zweite Anschlussöffnung 61 knapp oberhalb des Bodenventils 14 sind damit die beiden Arbeitsräume miteinander verbunden.

Der Anschlusskanal 55 wird von einer Durchgangsöffnung 63 im Boden 21 gebildet, durch die auch die Kolbenstange 5 verläuft, wobei der Ventilring 27 die Durchgangsöffnung 63 mit seiner oberen Stirnfläche verschließt.

Die Funktionsweise des Schwingungsdämpfers ist aus der DE 10 2006 054 257 A1 bekannt.

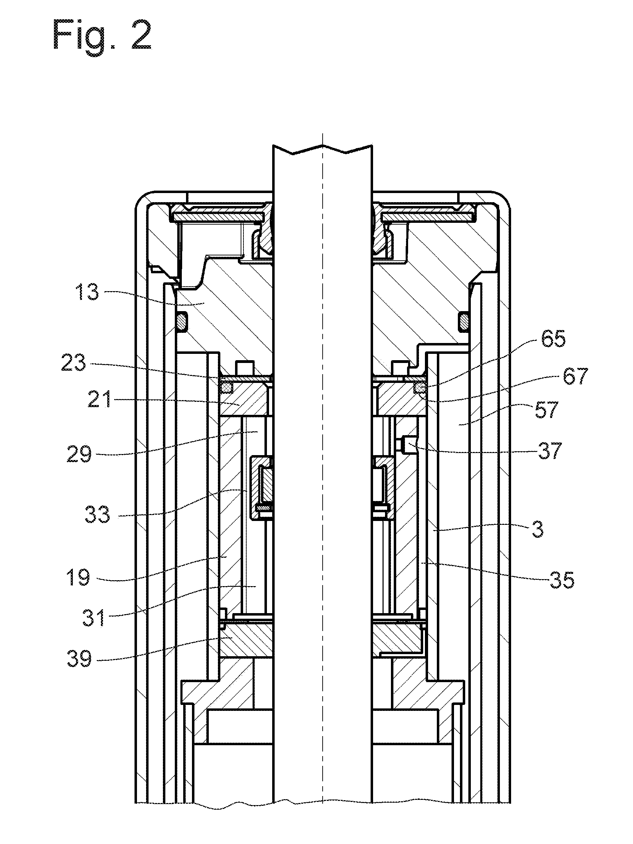

Die Figur 2 beschränkt sich auf einen Ausschnitt aus einem Schwingungsdämpfer gemäß der Bauform nach der Fig. 1 im Bereich der Ventilhülse 19. Der wesentliche Unterschied zwischen der Fig. 1 und der erfindungsgemäßen Ausgestaltung besteht darin, dass der Boden 21 und der Deckel 39 als scheibenförmige Einzelteile zur Ventilhülse 19 ausgeführt sind.

Sowohl die mindestens eine Axialnut 35 auf dem Außendurchmesser wie auch die mindestens eine Längsnut 33 auf dem Innendurchmesser der Ventilhülse erstrecken sich über die gesamte Länge der Ventilhülse 19.

Zur Abdichtung der mindestens einen Axialnut 35 in Richtung des Fluidenwegs 57 trägt der Boden 21 zur Innenwandung des Zylinders 3 eine Ringdichtung 65, die in einer Ringnut angeordnet ist, die von einem Absatz 67 des Bodens 21 und einer Deckscheibe 23 gebildet wird. Wie leicht erkennbar ist, weist der Boden 21 damit keine Hinterschneidungen auf, die nachteilig für eine sintertechnische Herstellung wären. Um keine zusätzlichen Bauteile einführen zu müssen, ist die Deckscheibe als eine den Abfluss aus einer Arbeitskammer bestimmenden Drosselscheibe 23 ausgeführt.

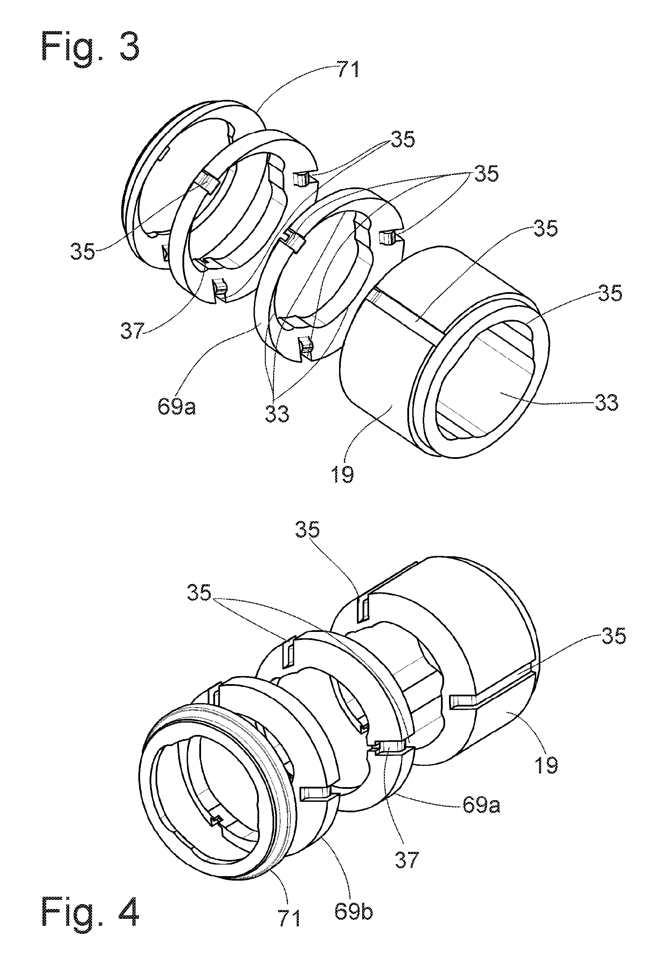

Die Figur 3 zeigt eine Variante einer Ventilhülse 19 mit drei Verlängerungsringen 69a; 69b, 71. Jeder Verlängerungsring 69 verfügt über ein Außen- und Innenprofil wie die Ventilhülse, also einen Abschnitt des Axialkanals 35 und der Strömungsverbindung 33. Wie insbesondere in der Zusammenschau mit der Fig. 4 erkennbar ist, verfügt die Ventilhülse 19 stirnseitig in Richtung der Verlängerungsringe 69a;69b über mehrere Verbindungskanäle 37, wobei mindestens ein Axialkanal an die Arbeitskammer 29 (Fig. 1) angeschlossen ist.

Alle Verlängerungsringe 69a;69b;71 sind in Umfangsrichtung zur Ventilhülse 19 orientiert montiert. Dazu verfügt jeder Verlängerungsring in Richtung der Ventilhülse über ein axial vorstehendes Formschlusselement 73, das in eine stirnseitige Aussparung der Ventilhülse 19 bzw. dem benachbarten Verlängerungsring 69a;69b eingreift. Die stirnseitige Aussparung in der Ventilhülse 19 und in den Verlängerungsringen bildet dabei zumindest einen Teilquerschnitt des Verbindungskanals 37 zwischen dem Axialkanal 35 und der Arbeitskammer 29. Wenn mehrere axial in Reihe angeordnete Verbindungskanäle 37 vorliegen, dann kann darüber der Dämpfkraftübergang zwischen der amplitudenselektiven Dämpfung und der Dämpfung im Boden- oder Kolbenventil bestimmt werden.

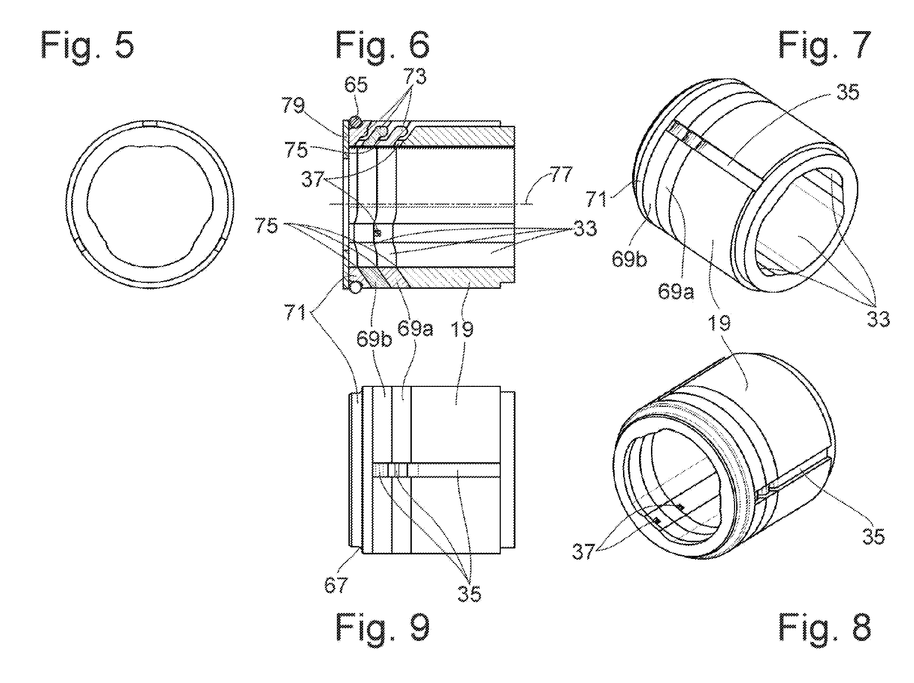

Die Zusammenschau der Fig. 5 bis 9 soll verdeutlichen, dass durch die Anzahl der Verlängerungsringe 69a;69b die axiale Größe der Arbeitskammern 29; 31 gestuft variabel ist. In der Schnittdarstellung nach Fig. 6 ist der Formschluss eines Formschlusselements 73 mit einer stirnseitigen Aussparung in der Ventilhülse 19 oder einem Verlängerungsring 69a;69b erkennbar. Des Weiteren sieht man, dass ein Kontaktbereich 75 zwischen der Ventilhülse 19 und dem Verlängerungsring 69a einen Verbindungskanal 37 schneidet. Der Verlängerungsring 69a bildet praktisch den Deckel für den Verbindungskanal 37 in der Ventilhülse 19. Dieses Bauprinzip setzt sich zwischen zwei benachbarten Verlängerungsringen 69a;69b;71 fort.

Wie ebenfalls der Fig. 6 entnehmbar ist, verläuft der Kontaktbereich 75 zwischen einem Verlängerungsring und der Ventilhülse oder zwei benachbarten Verlängerungsringen konisch zu einer Längsachse 77 der Ventilhülse 19. Dadurch zentrieren sich alle Verlängerungsringe 69a;69b;71 auch außerhalb des Zylinders 3 zur Ventilhülse 19.

Dem Prinzip der Fig. 2 folgend weist auch der in Richtung der Kolbenstangenführung 13 oberste Verlängerungsring 71 einen Absatz 67 auf, der zur Aufnahme der Ringdichtung 65 dient. Eine Deckscheibe 79 bildet den Boden 21 für die Arbeitskammer 79.

### Bezugszeichenliste

- 1: Schwingungsdämpfer
- 3: Zylinder
- 5: Kolbenstange
- 7: Kolben
- 9; 11: Arbeitsräume
- 13: Kolbenstangenführung
- 14: Bodenventil
- 15: Behälterrohr
- 17: Ausgleichsraum
- 19: Ventilhülse
- 21: Boden
- 23: Drosselscheibe
- 25: Stirnfläche
- 27: Ventilring
- 29, 31: Arbeitskammern
- 33: Strömungsverbindung
- 34: Adapterring
- 35: Axialkanal
- 37: Verbindungskanal
- 39: Deckel
- 41: Drosselöffnung
- 43: Drosselscheibe
- 45: Reibring
- 47: Dichtring
- 49: Boden
- 51: Sicherungsring
- 53: Ventilöffnung
- 55: Anschlusskanal
- 57: Fluidenweg
- 59: Hüllrohr
- 61: zweite Anschlussöffnung
- 63: Durchgangskanal
- 65: Ringdichtung
- 67: Absatz
- 69a;b: Verlängerungsring
- 71: Verlängerungsring
- 73: Formschlusselement
- 75: Kontaktbereich
- 77: Längsachse
- 79: Deckscheibe

## Patentansprüche

1. Schwingungsdämpfer (1), umfassend einen mit Dämpfmedium gefüllten Zylinder (3), in dem eine Kolbenstange (5) mit einem Kolben (7) axial beweglich geführt ist, wobei der Kolben (5) den Zylinder (3) in einen kolbenstangenseitigen und einen kolbenstangenfernen Arbeitsraum (9;11) unterteilt, mit einer Ventilhülse (19), die zusammen mit einem Deckel (39) und einem Boden (21) Arbeitskammern (29;31) bilden, die von einem auf der Kolbenstange (5) axial beweglichen Ventilring (27) getrennt werden, **dadurch gekennzeichnet, dass** der Boden (21) und der Deckel (39) als scheibenförmige Einzelteile zur Ventilhülse (19) ausgeführt sind.

2. Schwingungsdämpfer nach Anspruch 1, **dadurch gekennzeichnet, dass** die Ventilhülse (19) auf ihrem Außendurchmesser mindestens eine Axialnut (35) aufweist, die sich über ihre gesamte Länge erstreckt.

3. Schwingungsdämpfer nach Anspruch 1, **dadurch gekennzeichnet, dass** die Ventilhülse (19) auf ihrem Innendurchmesser mindestens eine Längsnut (33) aufweist, die sich über ihre gesamte Länge erstreckt.

4. Schwingungsdämpfer nach Anspruch 1, **dadurch gekennzeichnet, dass** der Boden (21) zur Innenwandung des Zylinders (3) eine Ringdichtung (65) trägt, die in einer Ringnut angeordnet ist, die von einem Absatz (67) des Bodens (21) und einer Deckscheibe (23;79) gebildet wird.

5. Schwingungsdämpfer nach Anspruch 4, **dadurch gekennzeichnet, dass** die Deckscheibe als eine den Abfluss aus der Arbeitskammer (29) bestimmenden Drosselscheibe (23) ausgeführt ist.

6. Schwingungsdämpfer nach Anspruch 1, **dadurch gekennzeichnet, dass** die Ventilhülse (19) mindestens einen Verlängerungsring (69a;69b;71) trägt, wobei der Verlängerungsring (69a;69b) dem Innen- und Außenprofil der Ventilhülse (19) angepasst und in Umfangsrichtung orientiert montiert ist.

7. Schwingungsdämpfer nach Anspruch 6, **dadurch gekennzeichnet, dass** ein Kontaktbereich (75) zwischen der Ventilhülse (19) und einem Verlängerungsring (69a) einen Verbindungskanal (37) schneidet.

8. Schwingungsdämpfer nach Anspruch 7, **dadurch gekennzeichnet, dass** der Kontaktbereich (75) konisch zur Längsachse (77) der Ventilhülse (19) verläuft.

9. Schwingungsdämpfer nach Anspruch 6, **dadurch gekennzeichnet, dass** der Verlängerungsring (69a;69b;71) in Richtung der Ventilhülse (19) ein axial vorstehendes Formschlusselement (73) aufweist, das in eine stirnseitige Aussparung (37) der Ventilhülse (19) eingreift.

10. Schwingungsdämpfer nach Anspruch 9, **dadurch gekennzeichnet, dass** die stirnseitige Aussparung in der Ventilhülse (19) zumindest einen Teilquerschnitt des Verbindungskanals (37) bildet.

11. Schwingungsdämpfer nach Anspruch 6, **dadurch gekennzeichnet, dass** ein Verlängerungsring (71) zur Innenwandung des Zylinders (3) eine Ringdichtung (65) trägt, die in einer Ringnut angeordnet ist, die von einem Absatz (67) des Verlängerungsrings (71) und einer Deckscheibe (79) gebildet wird.
